# EUROPEAN PATENT APPLICATION

(11) **EP 1 221 695 A2**
(43) Date of publication of application: **10.07.2002**
(21) Application number: 01308378.7
(22) Date of filing: 01.10.2001
(51) Int. Cl.: G11B 7/09

(54) **Differential phase detection device and tracking error signal detection apparatus using the same**

(30) Priority: 26.12.2000 KR 2000082052
(71) Applicant: SAMSUNG ELECTRONICS CO., LTD., Suwon-City, Kyungki-do (KR)
(72) Inventor: Ma, Byung-in, Suwon-si, Gyeonggi-do (KR); Park, In-sik, 615-801 Shinnamushil Kukdong Apt., Suwon-si, Gyeonggi-do (KR); Seo, Joong-eon, Uiwang-si, Gyeonggi-do (KR); Go, Sung-ro, Taean-eup Hwaseong-si, Gyeonggi-do (KR); Jung, Soo-yul, Gunpo-si, Gyeonggi-do (KR); Yang, Chang-jin, 513-1904 Shinnamushil Jugong Apt., Suwon-si, Gyeonggi-do (KR)
(74) Representative: Robinson, Ian Michael

(57) **Abstract**

A differential phase detection device (70) and a tracking error signal detection apparatus using the same are provided. The differential phase detection device (70) includes a slicer (75) for slicing and digitizing each of first through fourth input signals (a,b,c,d) received from a photodetector (50). A first synthesizer (77) synthesizes the first signal (a) and the third signal (c) to generate a first synthesis signal (sa), and a second synthesizer (79) synthesizes the second signal (b) and the fourth signal (d) to generate a second synthesis signal (sb). A single phase difference detector (85) is used to compare the phase of the first synthesis signal (sa) with the phase of the second synthesis signal (sb) to generate a first phase difference signal (pa) and a second phase difference signal (pb), and a matrix circuit performs subtraction on the first and second phase difference signals (pa,pb) to output a differential phase signal, such as a Tracking Error Signal (TES). Advantageously, the pair of synthesizers (77,79) avoid the need for a delay unit which is used in the prior art. Also, only a single phase difference detector (85) is used. Consequently, the volume of the differential phase detection device (70) is small. In addition, the tracking error signal detection apparatus using the differential phase detection device (70) can detect a tracking error signal which is relatively less influenced by a radial tilt, a tangential tilt, a defocus, a change in the thickness of an optical disc, a change in the depth of a pit recorded on an optical disc and/or the shift of an objective lens, compared to a conventional one.

## Description

The present invention relates to a differential phase detection device having an improved structure and a tracking error signal detection apparatus using the same.

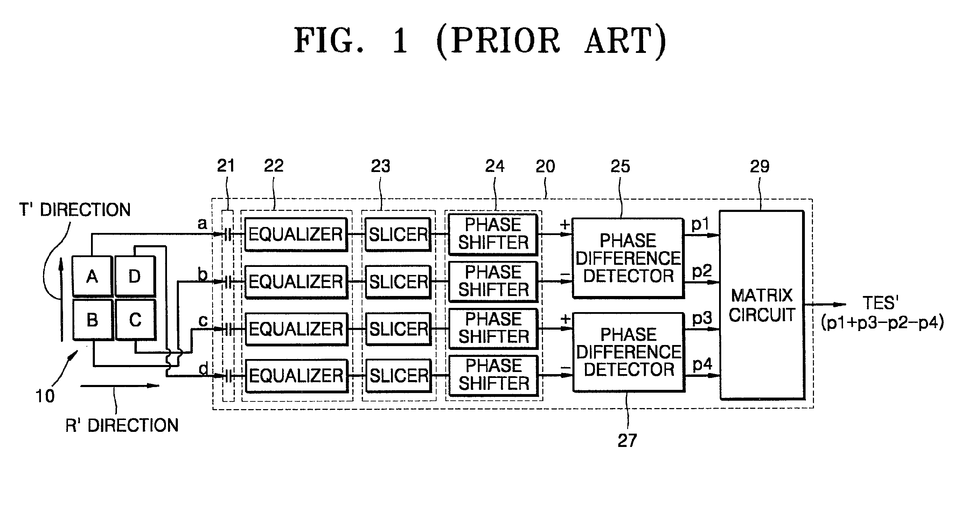

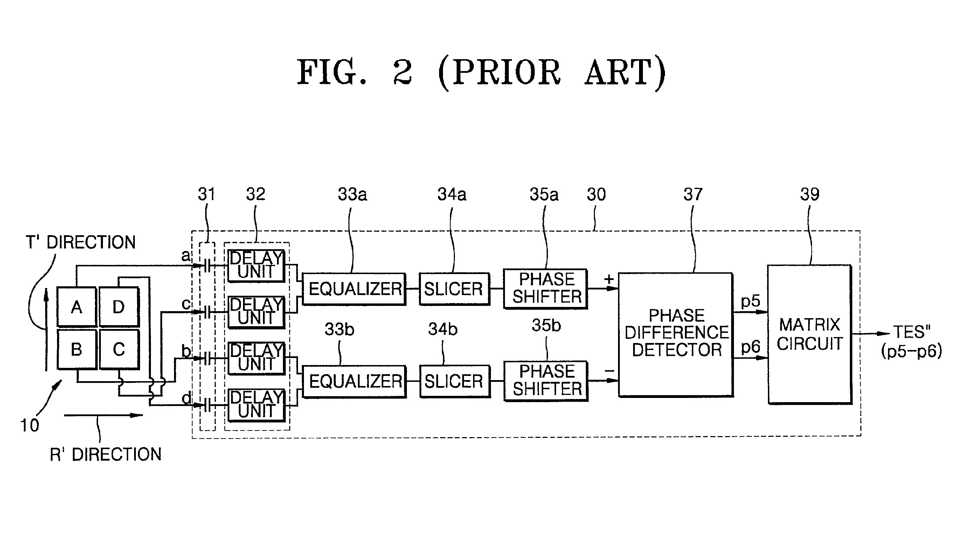

Generally, as shown in Figures 1 and 2, a tracking error signal detection apparatus using differential phase detection (DPD) includes a four-division photodetector 10 for receiving light reflected from a recording medium and differential phase detection devices 20 and 30 for receiving four detection signals **a, b, c** and **d** output from the four-division photodetector 10, generating a plurality of phase difference signals, and performing an operation on the plurality of phase difference signals to detect a tracking error signal TES' and TES".

The four-division photodetector 10 is divided into two in a direction (R' direction) corresponding to the radial direction of the recording medium and two in a direction (T' direction) corresponding to the tangential direction of the recording medium. First through fourth division plates A, B, C and D of the four-division photodetector 10 are arranged counterclockwise and generate the first through fourth detection signals **a, b, c** and **d**, respectively.

Referring to Figure 1, the differential phase detection device 20 as an example of conventional one includes four capacitors 21, four equalizers 22, four slicers 23, four phase shifters 24, two phase difference detectors 25 and 27 and a matrix circuit 29. The capacitors 21 perform AC coupling on the respective first through fourth detection signals **a, b, c** and **d**, thereby removing DC components. Each equalizer 22 amplifies the high-frequency component of a signal input via the capacitor 21. Each slicer 23 digitizes the signal amplified by the equalizer 22. Each phase shifter 24 shifts the phase of the digitized signal to control the offset or balance of a final output. The phase difference detector 25 detects the phase difference between the digitized signals of the first and second detection signals **a** and **b**, which are input from the corresponding two phase shifters 24, and outputs first and second phase difference signals p1 and p2. The other phase difference detector 27 detects the phase difference between the digitized signals of the third and fourth detection signals **c** and **d**, which are input from the corresponding two phase shifters 24, and outputs third and fourth phase difference signals p3 and p4. The matrix circuit receives the first through fourth phase difference signals p1, p2, p3 and p4 and performs an operation on them, thereby outputting the tracking error signal TES'. The tracking error signal TES' is a differential signal between the sum p1+p3 of the first and third phase difference signals p1 and p3 and the sum p2+p4 of the second and fourth phase difference signals p2 and p4.

Since the conventional differential phase detection device 20 includes the two phase difference detectors 25 and 27 to detect phase difference signals, the entire volume of the differential phase detection device 20 is large, and an output signal can be degraded due to the difference between the two phase difference detectors 25 and 27 in a gain characteristic.

Referring to Figure 2, the differential phase detection device 30, as another example of a conventional one, has a structure that overcomes the problems of the differential phase detection device 20 of Figure 1. The differential phase detection device 30 includes four capacitors 31, four delay units 32, two equalizers 33a and 33b, two slicers 34a and 34b, two phase shifters 35a and 35b, a phase difference detector 37 and a matrix circuit 39. In Figures 1 and 2, the same reference numerals denote the same members having the same functions.

The capacitors 31 perform AC coupling on respective first through fourth detection signals **a, b, c** and **d** received from the four-division photodetector 10, thereby removing DC components.

The delay units 32 time-delay signals received from the respective capacitors 31. The delay units 32 are provided for compensating for the offset of a final output, that is, the tracking error signal TES", when the shift of an objective lens of an optical pickup occurs, or when the depth of a pit recorded on an optical disc deviates from a specified value. The delay units 32 relatively delay the first and second detection signals **a** and **b** output from the preceding first and second division plates A and B in the T' direction or the third and fourth detection signals **c** and **d** output from the succeeding third and fourth division plates C and D. The delay units 32 appropriately delay the first detection signal **a** and/or the third detection signal **c** such that a delay value applied to the first detection signal **a** becomes positive or negative with respect to the third detection signal c. Likely, the delay units 32 appropriately delay the second detection signal **b** and/or the fourth detection signal **d** such that a delay value applied to the second detection signal **b** becomes positive or negative with respect to the fourth detection signal **d**.

The first and third detection signals **a** and **c** output from the delay units 32 are summed and equalized by the equalizer 33a. The second and fourth detection signals **b** and **d** output from the delay units 32 are summed and equalized by the equalizer 33b. The slicers 34a and 34b digitize the amplified sum signals from the equalizers 33a and 33b, respectively. The phase shifters 35a and 35b shift the phases of the respective digitized sum signals to control the offset or balance of a final output. The phase difference detector 37 detects the phase difference between the sum signals received from the respective phase shifters 35a and 35b and outputs two phase difference signals p5 and p6. The matrix circuit 39 performs a differential operation on the two phase difference signals p5 and p6 received from the phase difference detector 37 to output the tracking error signal TES".

Since the differential phase detection device 30 of Figure 2 includes one phase difference detector 37, a problem of a gain error between the two phase difference detectors 25 and 27 occurring in the device of Figure 1 does not occur.

However, in order to realize a structure using the one phase difference detector 37, the differential phase detection device 30 of Figure 2 employs the four delay units 32 to compensate for the phase difference between the first and third detection signals **a** and **c** and the phase difference between the second and fourth detection signals **b** and **d**. Accordingly, the total volume of the differential phase detection device 30 is large due to a large volume of the block of the delays 32, and a large amount of power is required to operate the delays 32. In addition, since the delay values of the delay units 32 are related to the frequency of a reproduced signal, a unit for selecting a delay value appropriate for a multiple speed at which data will be reproduced from an optical disc is required. Consequently, the differential phase detection device 30 of Figure 2 has a larger volume than the differential phase detection device 20 of Figure 1 and consumes a large amount of power.

With the above problems in mind, it is an aim of the present invention to provide a differential phase detection device of an improved structure, preferably employing a single phase difference detector and without using a delay unit. Another aim is to provide a tracking error signal detection apparatus using the same.

According to a first aspect of the present invention, there is provided a differential phase detection device for detecting a differential phase from first through fourth signals. The differential phase detection device includes a slicer for slicing and digitizing each of the first through fourth signals with respect to a reference level, a first synthesizer for synthesizing the first signal and the third signal to generate and output a first synthesis signal, a second synthesizer for synthesizing the second signal and the fourth signal to generate and output a second synthesis signal, a phase difference detector for comparing the phase of the first synthesis signal with the phase of the second synthesis signal to generate and output a first phase difference signal and a second phase difference signal, and a matrix circuit for performing subtraction on the first and second phase difference signals received from the phase difference detector to output a differential phase signal.

Here, the first and second synthesizers perform time averaging, an AND operation or an OR operation on the first and third signals and the second and fourth signals, respectively, to generate the first and second synthesis signals.

Preferably, the differential phase detection device further includes an alternating current (AC) coupler for removing direct current (DC) components from the first through fourth signals; and/or an equalizer for amplifying the first through fourth signals, the AC coupler and/or the equalizer being provided prior to the slicer.

Preferably, the differential phase detection device further includes a phase shifter for shifting the phase of an input signal between the slicer and the first and second synthesizers or between the first and second synthesizers and the phase difference detector.

There is also provided a tracking error signal detection apparatus including a photodetector for receiving light reflected from a recording medium and a differential phase detection device for detecting a tracking error signal from detection signals output from the photodetector, the photodetector including first through fourth division plates which are disposed counterclockwise or clockwise along directions corresponding to the radial and tangential directions of the recording medium, the first through fourth division plates receiving light and outputting first through fourth detection signals, respectively, the differential phase detection device including a slicer for slicing and digitizing each of the first through fourth signals with respect to a reference level; a first synthesizer for synthesizing the first signal and the third signal, which are output from the first and third division plates positioned on one diagonal direction of the photodetector and digitized, to generate and output a first synthesis signal; a second synthesizer for synthesizing the second signal and the fourth signal, which are output from the second and fourth division plates positioned on the other diagonal direction of the photodetector and digitized, to generate and output a second synthesis signal; a phase difference detector for comparing the phase of the first synthesis signal with the phase of the second synthesis signal to generate and output a first phase difference signal and a second phase difference signal; and a matrix circuit for performing subtraction on the first and second phase difference signals received from the phase difference detector to output a tracking error signal.

For a better understanding of the invention, and to show how embodiments of the same may be carried into effect, reference will now be made, by way of example, to the accompanying diagrammatic drawings in which:
Figure 1 is a schematic block diagram illustrating a tracking error signal detection apparatus using one conventional differential phase detection device;
Figure 2 is a schematic block diagram illustrating a tracking error signal detection apparatus using another conventional differential phase detection device;
Figure 3 is a schematic block diagram illustrating a tracking error signal detection apparatus using a differential phase detection device according to one embodiment of the present invention;
Figure 4 is a graph illustrating the principle of synthesis of signals performed by time averaging, AND operation and OR operation in each synthesizer of the differential phase detection device of Figure 3;
Figure 5 is a schematic block diagram illustrating a tracking error signal detection apparatus using a differential phase detection device according to another embodiment of the present invention;
Figures 6A and 6B are graphs illustrating tracking error signals detected by the conventional differential phase detection device of Figure 2 with respect to a DVD-ROM disc and a DVD-RW disc, respectively;
Figures 7A and 7B are graphs illustrating tracking error signals detected by a differential phase detection device according to the present invention with respect to a DVD-ROM disc and a DVD-RW disc, respectively, when each of the first and second synthesizers of the differential phase detection device is realized as an AND gate;
Figures 8A and 8B are graphs illustrating tracking error signals detected by a differential phase detection device according to the present invention with respect to a DVD-ROM disc and a DVD-RW disc, respectively, when each of the first and second synthesizers of the differential phase detection device is realized as an OR gate; and
Figures 9 through 16 are graphs illustrating the offsets of a tracking error signal detected by a tracking error signal detection apparatus according to the present invention in an on-track state, with respect to a radial tilt, a tangential tilt, a defocus, a detrack, the shift of an objective lens, a change in the thickness of an optical disc, a change in the depth of a pit recorded on an optical disc and the shift of an objective lens plus a change in the depth of a pit recorded on an optical disc, respectively.

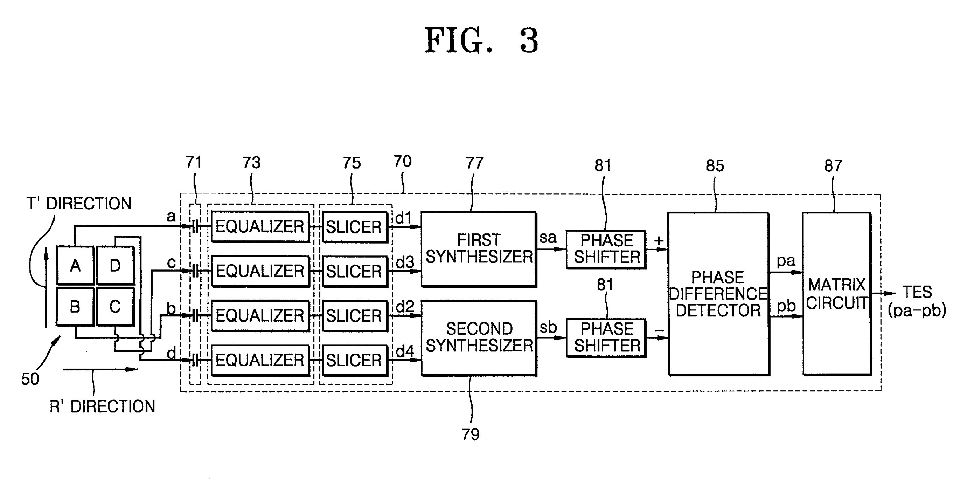

Figure 3 is a schematic block diagram illustrating an embodiment of a tracking error signal detection apparatus using a differential phase detection device according to the present invention. Referring to Figure 3, the tracking error signal detection apparatus includes a photodetector 50 for receiving light reflected from a recording medium and a differential phase detection device 70 for detecting a differential phase from detection signals **a, b, c** and **d** output from the photodetector 50.

The photodetector 50 includes first through fourth division plates A, B, C and D in R' and T' directions counterclockwise (or clockwise). The first and third division plates A and C are positioned on one diagonal line, and the second and fourth division plates B and D are positioned on the other diagonal line. The first through fourth detection signals **a, b, c** and **d** output from the first through fourth division plates A, B, C and D, respectively, are input to the differential phase detection device 70.

The differential phase detection device 70 includes a slicer unit 75 having four slicers, first and second synthesizers 77 and 79, a phase difference detector 85 and a matrix circuit 87. The differential phase detection device 70 may also include an AC coupling unit 71 and/or an equalizer unit 73 prior to the slicer unit 75.

The AC coupling unit 71 includes capacitors to perform AC coupling on the first through fourth detection signals **a, b, c** and **d** to remove DC components. After passing through the AC coupling unit 71, the first through fourth detection signals **a, b, c** and **d** have only high frequency components. The equalizer unit 73 amplifies the high frequency components of the first through fourth detection signals **a, b, c** and **d** from the AC coupling unit 71. The slicer unit 75 slices and digitizes each of the first through fourth detection signals **a, b, c** and **d** from the equalizer unit 73 with respect to a predetermined reference level, thereby generating first through fourth digitized signals d1, d2, d3 and d4.

Each of the first and second synthesizers 77 and 79 is a logical matrix and includes a unit for time-averaging an input signal, an AND gate or an OR gate. The first synthesizer 77 performs time averaging, an AND operation or an OR operation on the first and third digitized signals d1 and d3 from the slicers 75, thereby generating a first synthesis signal sa. Like the first synthesizer 77, the second synthesizer 79 performs time averaging, an AND operation or an OR operation on the second and fourth digitized signals d2 and d4 from the slicers 75, thereby generating a second synthesis signal sb.

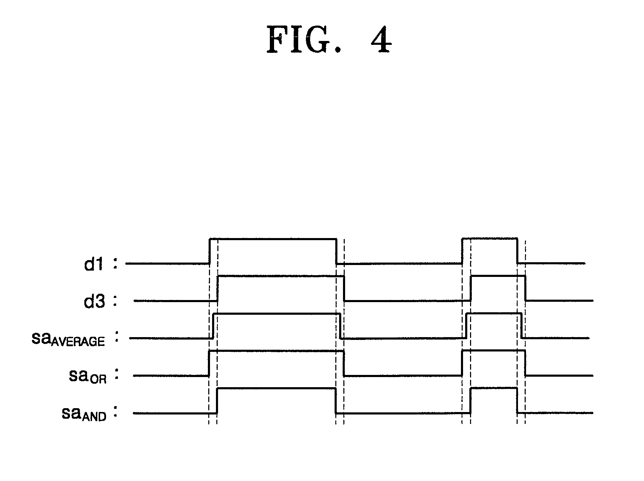

As shown in Figure 4, when the first synthesizer 77 performs time-averaging on the first and third digitized signals d1 and d3, a first synthesis signal sa_{AVERAGE} is generated. When the first synthesizer 77 performs an AND operation on the first and third digitized signals d1 and d3, a first synthesis signal sa_{AND} is generated. When the first synthesizer 77 performs an OR operation on the first and third digitized signals d1 and d3, a first synthesis signal sa_{OR} is generated. The second synthesizer 79 also generates the second synthesis signal sb by synthesizing the second and fourth digitized signals d2 and d4 like the first synthesizer 77. Since each of the first and second synthesis signals sa and sb generated by the first and second synthesizers 77 and 79, respectively, changes a little depending on a synthesizing method, the first and second synthesizers 77 and 79 are preferably provided such that they can generate the first and second synthesis signals sa and sb using the same synthesis method.

The phase difference detector 85 detects the phase difference between the first and second synthesis signals sa and sb output from the first and second synthesizers 77 and 79, thereby outputting first and second phase difference signals pa and pb. It is assumed that the first synthesis signal sa is input to a positive (+) input terminal of the phase difference detector 85, and the second synthesis signal sb is input to a negative (-) input terminal of the phase difference detector 85. The first phase difference signal pa corresponds to the phase difference between the first and second synthesis signals sa and sb when the phase of the first synthesis signal sa input to the + input terminal leads the phase of the second synthesis signal sb. The second phase difference signal pb corresponds to the phase difference between the first and second synthesis signals sa and sb when the phase of the second synthesis signal sb input to the - input terminal leads the phase of the first synthesis signal sa.

When the differential phase detection device 70 is used in a tracking error signal detection apparatus, the matrix circuit 87 performs a differential operation and integration on the first and second phase difference signals pa and pb output from the phase difference detector 85. The result signal of performing a differential operation and integration on the first and second phase difference signals pa and pb is a tracking error signal TES. The matrix circuit 87 of the differential phase detection device 70 is appropriately modified depending on a system employing the differential phase detection device 70. For example, when the differential phase detection device 70 is employed by a seek direction detection system, the matrix circuit 87 has a structure of summing and integrating the two input phase difference signals pa and pb.

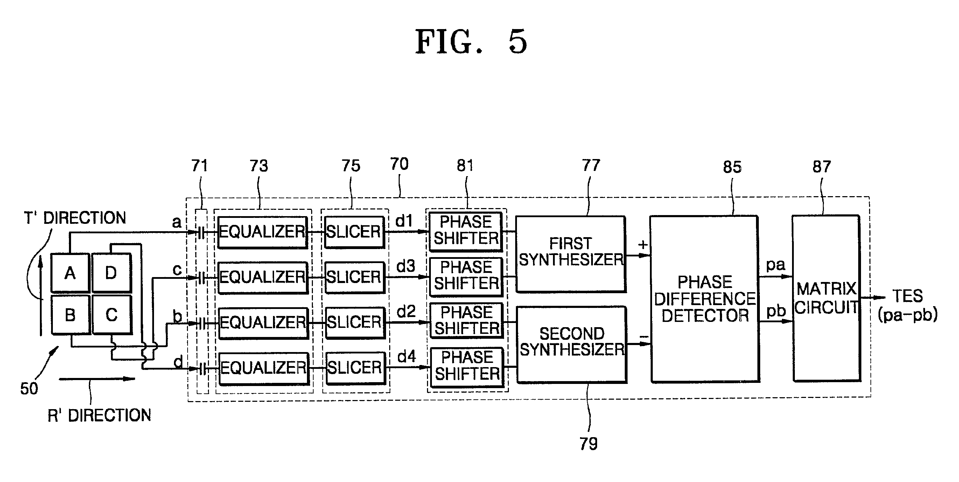

The differential phase detection device 70 according to the present invention preferably includes a phase shifter 81 for shifting the phase of an input signal to control the offset or balance of a final output. Two phase shifters 81 may be installed such that one is disposed between the first synthesizer 77 and one input terminal of the phase difference detector 85, and the other is disposed between the second synthesizer 79 and the other input terminal of the phase difference detector 85. Alternatively, the phase shifter 81 may be disposed between the slicer unit 75 and the input terminals of the first and second synthesizers 77 and 79, as shown in Figure 5. When the phase shifter 81 is disposed between the slicer unit 75 and the input terminals of the first and second synthesizers 77 and 79, as shown in Figure 5, different time delays can be applied to the individual first through fourth digitized signals d1, d2, d3 and d4, so that the offset and balance of a final output can be controlled more effectively.

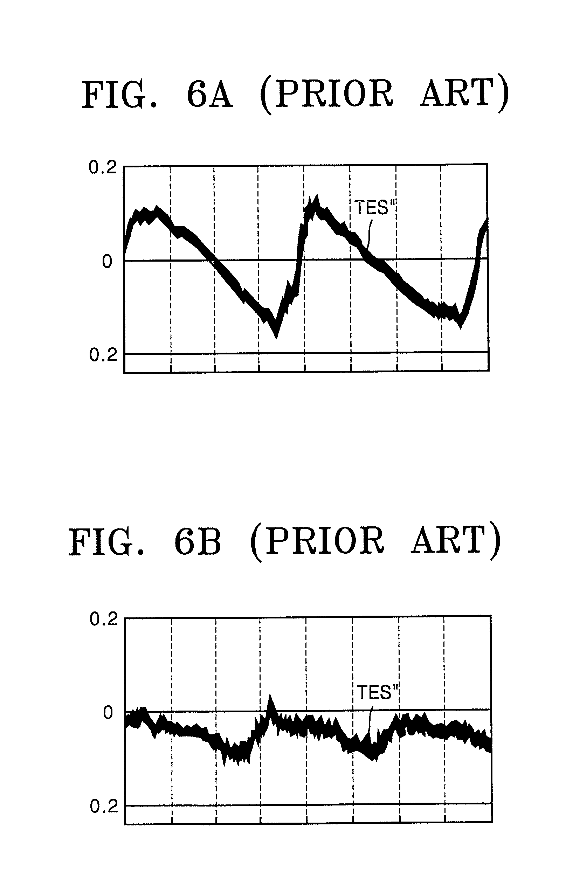

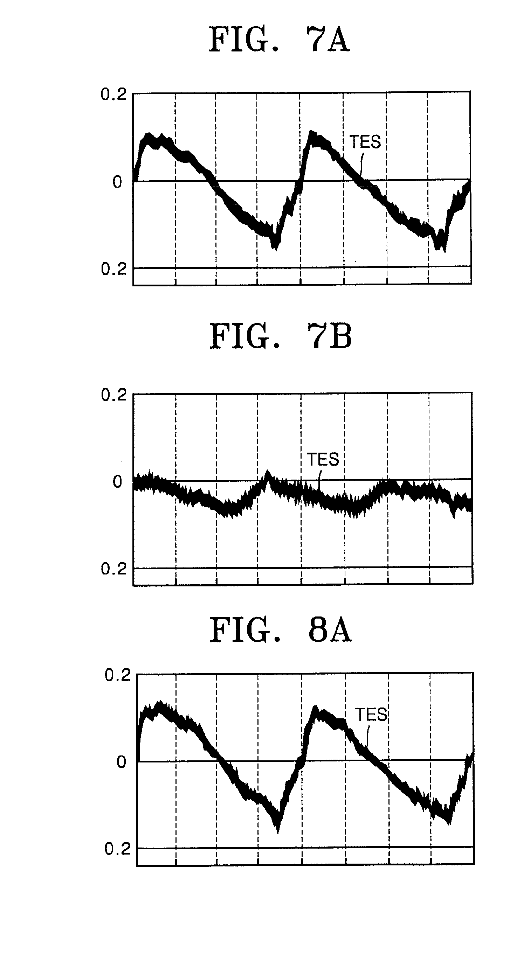

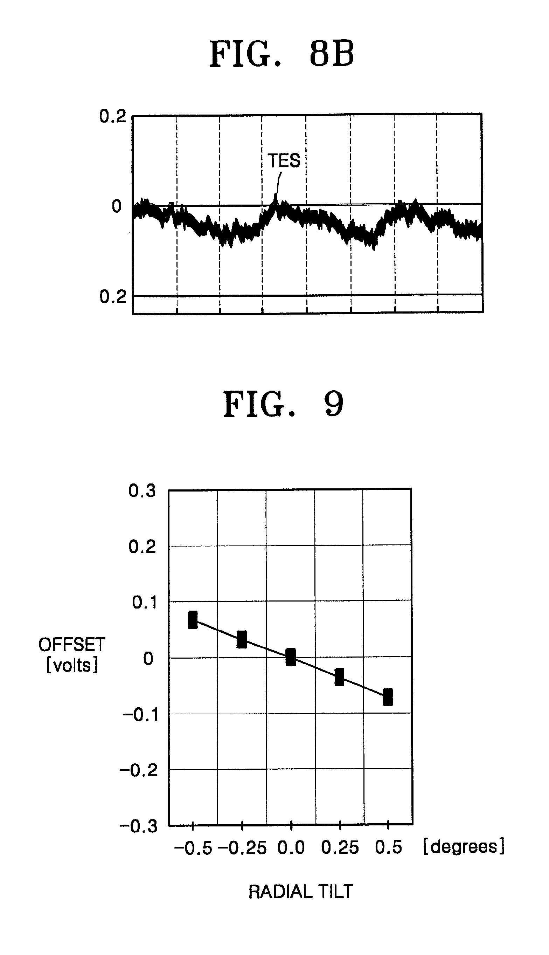

The following description concerns the characteristics of a signal detected by a tracking error signal detection apparatus employing the differential phase detection device 70 according to the present invention. Figures 6A and 6B are graphs illustrating tracking error signals TES" detected by the conventional differential phase detection device 30 of Figure 2 with respect to a DVD-ROM disc and a DVD-RW disc, respectively. Figures 7A and 7B are graphs illustrating tracking error signals TES detected by the differential phase detection device 70 according to the present invention with respect to a DVD-ROM disc and a DVD-RW disc, respectively, when each of the first and second synthesizers 77 and 79 is realized as an AND gate. Figures 8A and 8B are graphs illustrating tracking error signals TES detected by the differential phase detection device 70 according to the present invention with respect to a DVD-ROM disc and a DVD-RW disc, respectively, when each of the first and second synthesizers 77 and 79 is realized as an OR gate.

As shown in Figures 6A, 7A and 8A, for a DVD-ROM disc, the differential phase detection device 70 according to the present invention can detect a tracking error signal which is not inferior to that detected by the conventional differential phase detection device 70 employing the delay unit 32. As shown in Figures 6B, 7B and 8B, for a DVD-RW disc, the differential phase detection device 70 according to the present invention can also detect a tracking error signal which is not inferior to that detected by the conventional differential phase detection device 70 employing the delay unit 32. In addition, as seen from the comparison between Figure 7A and Figure 8A and the comparison between Figure 7B and Figure 8B, tracking error signals of similar qualities are detected when each of the first and second synthesizers 77 and 79 is realized as an AND gate and when each of the first and second synthesizers 77 and 79 is realized as an OR gate.

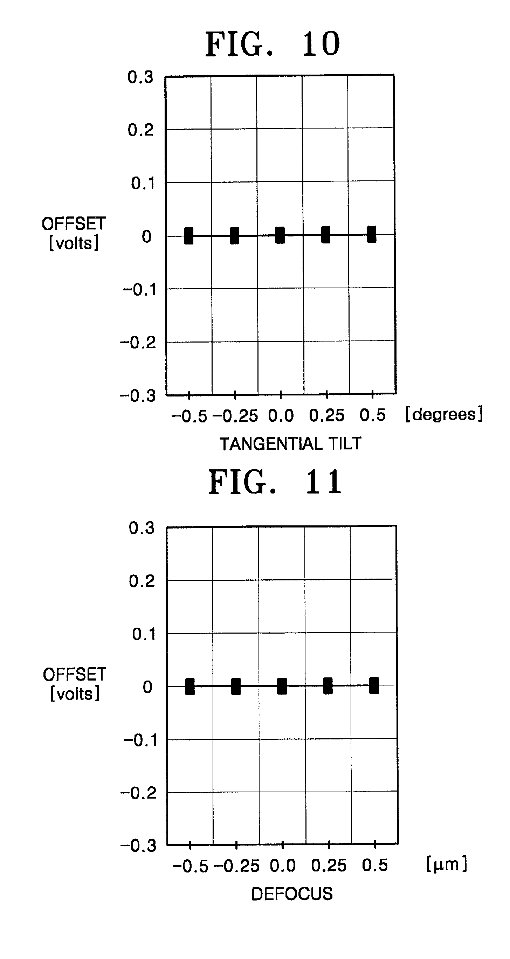

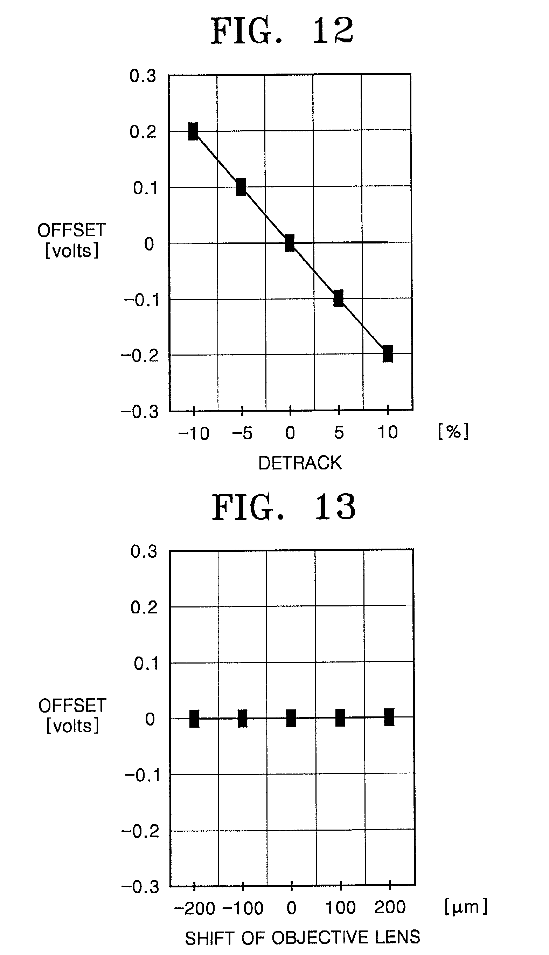

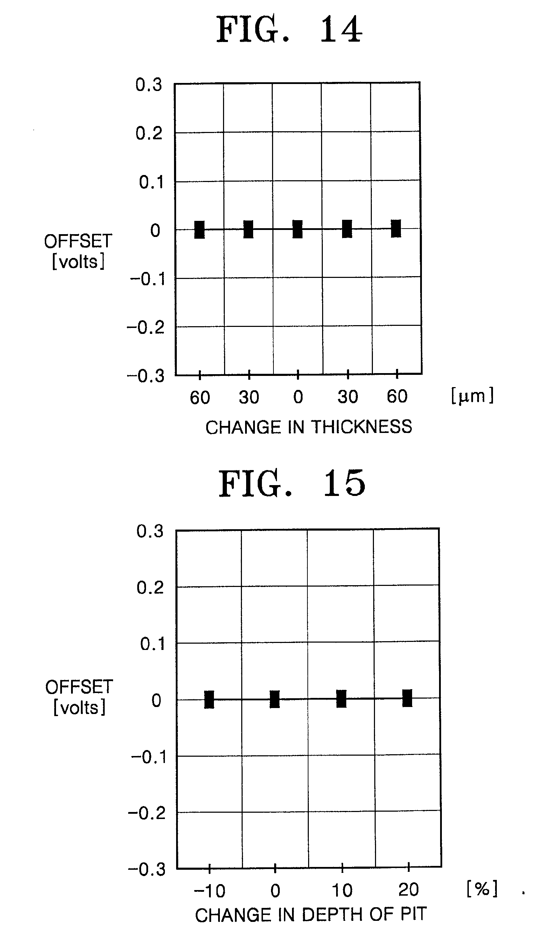

Figures 9 through 15 are graphs illustrating the offsets of a tracking error signal TES detected by a tracking error signal detection apparatus according to the present invention in an on-track state, with respect to a radial tilt, a tangential tilt, a defocus, a detrack, the shift of an objective lens, a change in the thickness of an optical disc, a change in the depth of a pit recorded on an optical disc, respectively. Here, the optical disc is a DVD-ROM.

As shown in Figures 9 through 15, a tracking error signal detection apparatus according to the present invention can detect a tracking error signal TES which is rarely influenced by a radial tilt, a tangential tilt, a defocus, the shift of an objective lens, a change in the thickness of an optical disc and a change in the depth of a pit, but reacts greatly to a detrack. Referring to Figure 9, a tracking error signal TES detected by a tracking error signal detection apparatus according to the present invention is slightly influenced by a radial tilt, but this influence can be ignored because an offset value with respect to the radial tilt is within the tilt margin of the system.

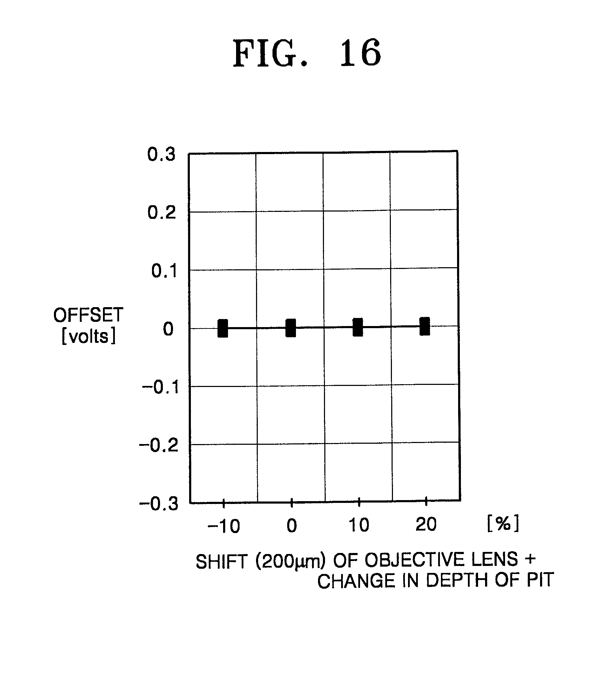

Even when a change in the depth of a pit recorded on an optical disc and the shift of an objective lens occur simultaneously, as shown in Figure 16, a tracking error signal detected by a tracking error signal detection apparatus according to the present invention does not have an offset. Figure 16 is a graph illustrating an offset depending on a change in the depth of a pit in a state in which an objective lens is shifted by 200 µm.

As seen from the above description, the differential phase detection device 70 according to the present invention has much less volume and is not behind the conventional differential phase detection device 70 in performance in the least.

It has been described that the differential phase detection device 70 according to the present invention receives and performs an operation on the four detection signals **a, b, c** and **d** output from the four-division photodetector 50 and outputs the tracking error signal TES according to a differential phase detection method, but it is used in a descriptive sense only. In other words, the differential phase detection device 70 according to the present invention can be appropriately modified to be applied to a variety of systems for detecting a differential phase. Here, the divided structure of the photodetector 50 varies with the kind (e.g., radial tilt, tangential tilt or defocus) of differential phase signal to be detected.

As described above, a differential phase detection device according to the present invention includes a pair of synthesizers for synthesizing two digitized signals so that a delay unit conventionally used can be removed while only a single phase difference detector is used. Consequently, the volume of a differential phase detection device according to the present invention is small. In addition, a tracking error signal detection apparatus employing a differential phase detection device according to the present invention can detect a tracking error signal which is relatively less influenced by a radial tilt, a tangential tilt, a defocus, a change in the thickness of an optical disc, a change in the depth of a pit recorded on an optical disc and/or the shift of an objective lens, compared to a conventional one.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A differential phase detection device (70) for detecting a differential phase from first through fourth signals (a,b,c,d), comprising:
a slicer (75) for slicing and digitizing each of the first through fourth signals (a,b,c,d) with respect to a reference level;
a first synthesizer (77) for synthesizing the first signal (a) and the third signal (c) to generate and output a first synthesis signal (sa) ;
a second synthesizer (79) for synthesizing the second signal (b) and the fourth signal (d) to generate and output a second synthesis signal (sb);
a phase difference detector (85) for comparing the phase of the first synthesis signal (sa) with the phase of the second synthesis signal (sb) to generate and output a first phase difference signal (pa) and a second phase difference signal (pb); and
a matrix circuit (87) for performing subtraction on the first and second phase difference signals (pa,pb) received from the phase difference detector (85) to output a differential phase signal (TES).

2. The differential phase detection device of claim 1, wherein the first and second synthesizers (77,79) perform time averaging, an AND operation or an OR operation on the first and third signals (a,c) and the second and fourth signals (b,d), respectively, to generate the first and second synthesis signals (sa,sb).

3. The differential phase detection device of claim 1 or 2, further comprising an alternating current coupler (71) for removing direct current components from the first through fourth signals (a,b,c,d); and/or an equalizer (73) for amplifying the first through fourth signals (a,b,c,d), the alternating current coupler and/or the equalizer being provided prior to the slicer (75).

4. The differential phase detection device of claim 1, 2 or 3, further comprising a phase shifter (81) for shifting the phase of an input signal between the slicer (75) and the first and second synthesizers (77,79) or between the first and second synthesizers (77,79) and the phase difference detector (85).

5. A tracking error signal detection apparatus, comprising:
a photodetector (50) for receiving light reflected from a recording medium the photodetector comprising first through fourth division plates (A,B,C,D) which are disposed counterclockwise or clockwise along directions corresponding to the radial and tangential directions of the recording medium, the first through fourth division plates (A,B,C,D) receiving light and outputting first through fourth detection signals (a,b,c,d), respectively; and
a differential phase detection device (70) for detecting a tracking error signal from detection signals output from the photodetector, the differential phase detection device (70) comprising a slicer (75) for slicing and digitizing each of the first through fourth signals (a,b,c,d) with respect to a reference level; a first synthesizer (77) for synthesizing the first signal and the third signal, which are output from the first and third division plates positioned on one diagonal direction of the photodetector and digitized, to generate and output a first synthesis signal (sa) ; a second synthesizer (79) for synthesizing the second signal and the fourth signal, which are output from the second and fourth division plates positioned on the other diagonal direction of the photodetector and digitized, to generate and output a second synthesis signal (sb); a phase difference detector (85) for comparing the phase of the first synthesis signal with the phase of the second synthesis signal to generate and output a first phase difference signal and a second phase difference signal; and a matrix circuit (87) for performing subtraction on the first and second phase difference signals received from the phase difference detector to output a tracking error signal (TES).

6. The tracking error signal detection apparatus of claim 5, wherein the first and second synthesizers (77,79) perform time averaging, an AND operation or an OR operation on the first and third detection signals and the second and fourth detection signals, respectively, to generate the first and second synthesis signals.

7. The tracking error signal detection apparatus of claim 5 or 6, further comprising an alternating current coupler (71) for removing direct current components from the first through fourth detection signals; and/or an equalizer (73) for amplifying the first through fourth detection signals, the alternating current coupler and/or the equalizer being provided prior to the slicer (75).

8. The tracking error signal detection apparatus of claim 5, 6 or 7, further comprising a phase shifter (81) for shifting the phase of an input signal between the slicer (75) and the first and second synthesizers (77,79) or between the first and second synthesizers (77,79) and the phase difference detector (85).
